# EUROPEAN PATENT APPLICATION

(11) **EP 4 813 543 A1**
(43) Date of publication of application: **30.09.2026**
(21) Application number: 25877979.2
(22) Date of filing: 10.10.2025
(51) Int. Cl.: B21D 51/46, B21D 51/28, H01M 50/167

(54) **SECONDARY BATTERY FIXING DEVICE AND SECONDARY BATTERY FORMING DEVICE COMPRISING SAME**

(30) Priority: 11.10.2024 KR 20240138610
(71) Applicant: LG Energy Solution, Ltd., Seoul 07335 (KR)
(72) Inventor: KIM, Daecheon, Daejeon 34122 (KR); KIM, Eung Seo, Daejeon 34122 (KR); PARK, Dae Hyun, Daejeon 34122 (KR); LEE, Tae Hee, Daejeon 34122 (KR)
(74) Representative: Goddar, Heinz J.
(86) International application number: PCT/KR2025/015945
(87) International publication number: WO 2026/079910

(57) **Abstract**

A fixing device according to an embodiment of the present invention may comprise: a housing having an accommodation space in which a cylindrical secondary battery is accommodated; a fixing jig provided to fix the secondary battery by applying pressure to the outer circumferential surface of the secondary battery, at least a portion of the fixing jig being located in the accommodation space; and a pressure-obtaining unit extending between the fixing jig and the housing so as to sense the pressure applied by the fixing jig to the outer circumferential surface of the secondary battery. The pressure-obtaining unit may extend in the pressing direction in which the fixing jig applies pressure to the secondary battery.

## Description

### Technical Field

The present disclosure relates to a clamping apparatus for a secondary battery and a forming apparatus for a secondary battery including the same. This application claims the benefit of Korean Patent Application No. 2024-0138610, filed on October 11, 2024, the disclosure of which is incorporated herein by reference in its entirety.

### Background Art

Secondary batteries, which are rechargeable batteries unlike the primary batteries, may be utilized in various devices, such as digital cameras, mobile phones, laptop computers, hybrid vehicles, electric vehicles, and aerial vehicles. While various types of secondary batteries are used, such as nickel-cadmium batteries, nickel-metal hydride batteries, and nickel-hydrogen batteries, lithium-ion batteries have been widely utilized in recent years.

For cylindrical secondary batteries, a crimping process for sealing an electrode assembly and a top cap assembly using a can housing is performed during manufacturing.

In general, the crimping process is performed in a manner in which an outer peripheral surface of a cylindrical secondary battery is secured using a clamping jig to seal an upper end portion of a can of the battery, and the sealing is completed by physically deforming metal by pressing the upper end with a punch. There have been problems where the battery can is scratched or the clamping jig is damaged when excessive pressure is applied to the outer peripheral surface of the secondary battery during the process. Such problems lead to defects in the exterior of the battery, degradation of process safety, and an increase in equipment downtime and manufacturing costs.

The aforementioned description has been possessed or acquired by the inventor in the process of deriving the present disclosure, and is not necessarily a known technology disclosed to the general public prior to the filing of the present application.

### Detailed Description of the Invention

### Technical Goals

Example embodiments of the present disclosure have been devised in the view of the above-described problems.

An aspect provides a clamping apparatus capable of reducing physical damage to a secondary battery that may occur during a forming process of the secondary battery.

Another aspect provides a clamping apparatus configured to control a clamping force applied to a secondary battery.

### Technical solutions

A clamping apparatus according to an example embodiment of the present disclosure may include a housing formed with an accommodation space in which a cylindrical secondary battery is accommodated, a clamping jig configured to secure the secondary battery by pressing an outer peripheral surface of the secondary battery and of which at least a portion is positioned within the accommodation space, and a pressure acquisition unit extending between the clamping jig and the housing to detect a pressure applied to the outer peripheral surface of the secondary battery by the clamping jig.

The pressure acquisition unit may extend in a pressing direction in which the clamping jig presses the secondary battery.

The clamping jig may include a pressing body configured to press the outer peripheral surface of the secondary battery, and a support plate coupled to the pressing body to support the pressure acquisition unit.

One end portion of the pressure acquisition unit may be configured to be in contact with the support plate and an opposite end portion of the pressure acquisition unit may be configured to be in contact with an outer peripheral surface of the housing.

The pressing body may include a pressing head positioned within the accommodation space of the housing and configured to be in contact with the outer peripheral surface of the secondary battery, and a base plate extending outwardly from the pressing head toward an exterior of the housing, and the support plate may be provided at an end portion of the base plate in the extension direction.

The clamping apparatus according to an example embodiment of the present disclosure may further include an elastic unit configured to press the clamping jig in a releasing direction in which the clamping jig moves away from the secondary battery, such that the clamping jig releases a clamped state of the secondary battery.

The elastic unit may extend between the support plate and an outer peripheral surface of the housing, and the pressure acquisition unit may be disposed to be spaced apart from the elastic unit in a vertical direction and parallel to the elastic unit.

The support plate may include a first support plate coupled to the base plate to support the elastic unit, and a second support plate coupled to an upper portion of the first support plate to support the pressure acquisition unit.

The pressure acquisition unit may be configured to change in length in a pressing direction in which the clamping jig presses the secondary battery.

A pressing force with which the clamping jig presses the secondary battery may vary according to a length of the pressure acquisition unit.

The pressing force may decrease when the length of the pressure acquisition unit increases, and the pressing force may increase when the length of the pressure acquisition unit decreases.

The clamping jig may be provided in a plurality and may be disposed to surround the secondary battery in a circumferential direction.

The pressure acquisition unit may be a Cellex cylinder.

A forming apparatus according to an example embodiment of the present disclosure may include a housing formed with an accommodation space in which a cylindrical secondary battery is accommodated, a clamping jig configured to secure the secondary battery by pressing an outer peripheral surface of the secondary battery and of which at least a portion is positioned within the accommodation space, a pressure acquisition unit extending between the clamping jig and the housing to detect a pressure applied to the outer peripheral surface of the secondary battery by the clamping jig, a driving unit configured to operate the clamping jig in a direction toward the outer peripheral surface of the secondary battery, and a punch unit configured to form an upper end portion of the secondary battery, secured by the clamping jig, by pressing, the punch unit being coupled to the driving unit.

### Effects of the Invention

According to example embodiments, it is possible for a clamping apparatus to reduce physical damage to a secondary battery that may occur during formation of the secondary battery.

According to example embodiments, it is also possible for a clamping apparatus to control a clamping force applied to a secondary battery.

The effects according to the example embodiments are not limited by the contents exemplified above, and various other additional effects predictable from the specification and the drawings may be achieved.

### Brief Description of Drawings

FIG. 1 is a perspective view of a clamping apparatus according to an example embodiment of the present disclosure.
FIG. 2 is a perspective view in which a pressure acquisition unit and a second support plate of FIG.1 are omitted.
FIG. 3 is a perspective view of a clamping jig of a clamping apparatus according to an example embodiment of the present disclosure.
FIG. 4 is an exploded perspective view illustrating a state in which a cylindrical secondary battery is secured within a clamping apparatus according to an example embodiment of the present disclosure.
FIG. 5 is a cross-sectional view of a clamping apparatus taken along line A-A of FIG. 1 according to an example embodiment of the present disclosure.
FIG. 6 is a cross-sectional view of a clamping apparatus of FIG. 5 illustrating a state in which a length of a pressure acquisition unit is adjusted, according to an example embodiment of the present disclosure.
FIG. 7 is a schematic view of a forming apparatus according to an example embodiment of the present disclosure.

### Mode for Carrying Out the Invention

Hereinafter, example embodiments will be described in detail with reference to the accompanying drawings. The following description represents one of various aspects of the example embodiments, and forms a part of the detailed description of the example embodiment. In describing an example embodiment, a detailed description of a known technique or configuration will be omitted to avoid obscuring the gist of the present disclosure.

Terms or words used in the present disclosure and the accompanying claims are not to be limited to general definitions or dictionary definitions, and the terms and words are to be construed under the principle that an inventor may appropriately define a concept of a term in order to describe their invention in the best way. Thus, example embodiments described in the present disclosure and configurations illustrated in the accompanying drawings are merely the most desirable example embodiments and to not represent all of the technical spirit of the present disclosure, and it should be understood that various equivalents and modifications that may replace the example embodiments may exist at the time of filing.

The same reference numerals or symbols shown in each drawing of the present disclosure indicate parts or components that perform substantially the same function. For ease of explanation and understanding, different example embodiments may be described using the same reference numerals or symbols. That is, even though components having the same reference numerals are shown in the plurality of drawings, the plurality of drawing do not mean one example embodiment.

In the following descriptions, terms in singular form include terms in a plural form unless an apparently and contextually conflicting description is present. Terms such as "including" or "comprising" is to indicate that a feature, a number, an operation, an action, an element, a component, or a combination thereof is present, and it shall be understood that these terms do not exclude the possibility that one or more other features, numbers, operations, actions, elements, components, or combinations thereof may be present or added.

Also, it should be understood that terms such as 'upper side', 'upper surface', 'lower side', 'lower surface', 'side surface', 'front surface', or 'rear surface' are based on the directions shown in the accompanying drawings and may vary depending on the orientation of the corresponding object.

In addition, in describing a component of an example embodiment, terms such as "first", "second", "A", "B", "(a)", and "(b)" may be used. These terms are used to distinguish a component from other components only, and the nature, sequence, or order of the component is not limited by these terms. When a component is referred to as being "connected" or "coupled" to another component, it is to be understood that the component may be directly connected or coupled to the other component, or that an intervening component may be "connected" or "coupled" between the components.

Components having functions common to those of components included in one example embodiment will be described using the same names in other example embodiments. Unless otherwise stated, the description of a component in one example embodiment may be equally applicable to other example embodiments, and redundant descriptions thereof will be omitted.

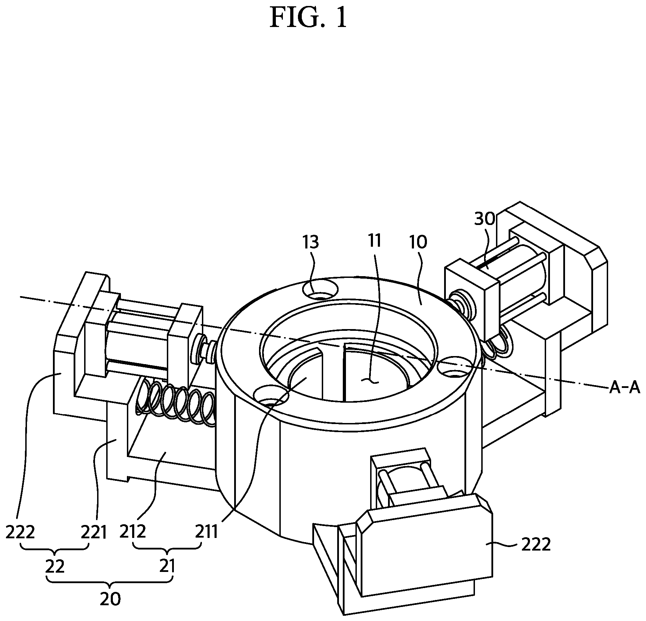

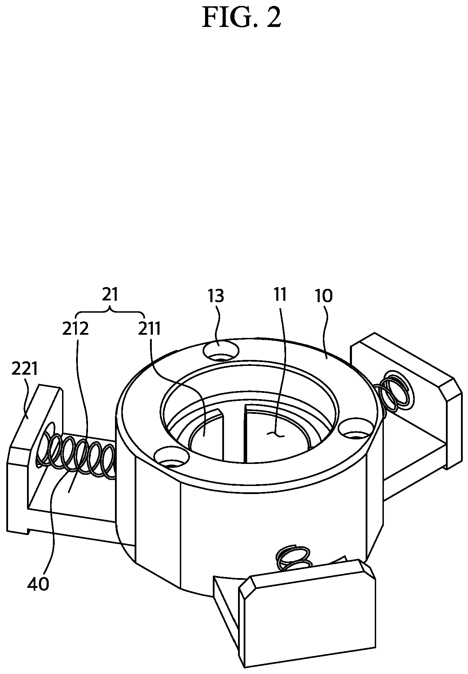

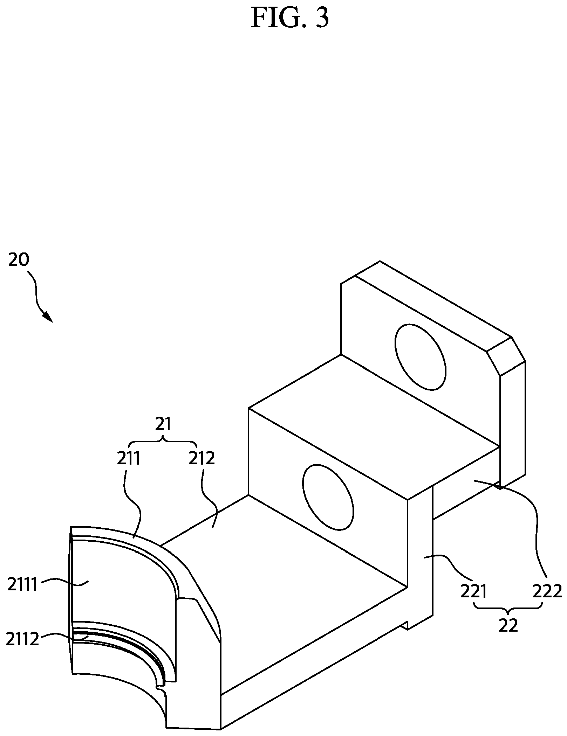

FIG. 1 is a perspective view of a clamping apparatus according to an example embodiment of the present disclosure, and FIG. 2 is a perspective view in which a pressure acquisition unit 30 and a second support plate 222 of FIG.1 are omitted. FIG. 3 is a perspective view of a clamping jig 20 of the clamping apparatus according to an example embodiment of the present disclosure.

The clamping apparatus according to an example embodiment of the present disclosure may be configured to secure a secondary battery. The clamping apparatus according to an example embodiment of the present disclosure may be configured to secure the secondary battery, particularly a cylindrical secondary battery, to a predetermined location for forming of a can of the cylindrical secondary battery.

The clamping apparatus according to an example embodiment of the present disclosure may secure the cylindrical secondary battery such that a crimping process is performed on the cylindrical secondary battery. The crimping process refers to a process of sealing an upper portion of a cylindrical secondary battery can, and during this process, as a top cap assembly is secured, an internal space of the can may be sealed from an external environment to prevent electrolyte leakage and inflow of foreign matter from the external environment. An upper opening of the cylindrical secondary battery, which is tightly secured by the clamping apparatus according to an example embodiment of the present disclosure, may be pressed by a punch unit, which will be described later, and the crimping process may be performed by inwardly folding an upper end portion of the can of the cylindrical secondary battery.

Referring to FIGS. 1 to 3, the clamping apparatus according to an example embodiment of the present disclosure may include a housing 10, the clamping jig 20, and a pressure acquisition unit 30.

An accommodation space 11 in which the cylindrical secondary battery (not shown) is accommodated may be formed in the housing 10. The secondary battery may be placed in the accommodation space 11 formed in the housing 10. The accommodation space 11 may be a circular space having a predefined depth, and the housing 10 may be formed in a ring shape with top and bottom ends open in a longitudinal direction of the secondary battery. The cylindrical secondary battery may be inserted into the accommodation space 11 of the housing 10 in the longitudinal direction. A diameter of the accommodation space 11 provided in the housing 10 may be greater than a diameter of the secondary battery. A coupling member 13 for coupling with an external device or a ground may be formed in the housing 10. The coupling member 13, for example, may be formed as a threaded hole into which a bolt is inserted for coupling.

The clamping jig 20 may be formed to secure the cylindrical secondary battery. The clamping jig 20 may secure the secondary battery by pressing an outer peripheral surface of the cylindrical secondary battery. The clamping jig 20 may be provided in a plurality and may be configured to surround the cylindrical secondary battery along a circumferential direction of the cylindrical secondary battery. For example, three clamping jigs 20 may be disposed at equal intervals along the circumferential direction of the cylindrical secondary battery.

The clamping jig 20 may be configured to move radially toward a center of the accommodation space 11 of the housing 10 within a predetermined range. The clamping jig 20 may move in a direction toward the center of the accommodation space 11 and be pressed against the outer peripheral surface of the cylindrical secondary battery, or may move in a direction away from the center of the accommodation space 11 and be spaced apart from the outer peripheral surface of the cylindrical secondary battery. A portion of the clamping jig 20 may be disposed within the accommodation space 11 of the housing 10.

The clamping jig 20 may include a pressing body 21 and a support plate 22.

The pressing body 21 may be configured to be in direct contact with the outer peripheral surface of the secondary battery and press the outer peripheral surface of the secondary battery, and the support plate 22 may be configured to be coupled to the pressing body 21 to support the pressure acquisition unit 30.

The pressing body 21 may include a pressing head 211 and a base plate 212.

The pressing head 211 may be positioned within the accommodation space 11 of the housing 10, and may be configured to be in contact with the outer peripheral surface of the secondary battery. The pressing head 211 may extend as a whole in a vertical direction, which corresponds to the longitudinal direction of the secondary battery. A pressing surface 2111 of the pressing head 211, which is pressed against the outer peripheral surface of the secondary battery, may be formed as a curved surface having a predetermined curvature corresponding to a shape of the outer peripheral surface of the cylindrical secondary battery, and a beading bump 2112 may be formed on the pressing surface 2111. The beading bump 2112 may be formed to protrude from the pressing surface 2111 of the pressing head 211 so as to be engaged with a beading neck of the cylindrical secondary battery.

The base plate 212 may extend outwardly from the pressing head 211 toward an exterior of the housing 10. The base plate 212 may extend outwardly from a lower end portion of the pressing head 211 in a direction toward the exterior of the housing 10. The base plate 212 may extend in a horizontal direction. The base plate 212 may be integrally formed with the pressing head 211. The pressing body 21 may have an L-shaped profile by the base plate 212 and the pressing head 211 being integrally form with each other.

The support plate 22 may be coupled to the pressing body 21. The support plate 22 may be coupled to the base plate 212 of the pressing body 21. The support plate 22 may be connected to an outer end portion of the base plate 212 in the longitudinal direction or in the extension direction of the base plate 212. The support plate 22 may be integrally formed with the pressing body 21, or may be configured as a separate component that is mechanically coupled to the pressing body 21.

The support plate 22 may be configured to support the pressure acquisition unit 30. The support plate 22 may support the pressure acquisition unit 30 and an elastic unit 40. At least a portion of the support plate 22 may extend in a vertical direction perpendicular to the base plate 212.

The support plate 22 may include a first support plate 221 and the second support plate 222.

The first support plate 221 may be configured to support the elastic unit 40. The first support plate 221 may be coupled to the outer end portion of the base plate 212 in the longitudinal direction or in the extension direction of the base plate 212. The first support plate 221 may face an outer peripheral surface of the housing 10. The first support plate 221 may be placed perpendicular to the base plate 212. The first support plate 221 may extend from the base plate 212 in the vertical direction perpendicular to the base plate 212 by a predetermined height. A groove, in which the elastic unit 40 may be seated, may be formed on one surface of the first support plate 221 facing the outer peripheral surface of the housing 10.

The second support plate 222 may be configured to support the pressure acquisition unit 30. The second support plate 222 may be coupled to an upper end of the first support plate 221. The second support plate 222 may include a portion extending vertically to face the outer peripheral surface of the housing 10 and a portion horizontally extending from an end portion of the first support plate 221. The second support plate 222 may generally formed in a shape of an L-shaped beam. A distance between one surface of the second support plate 222 on which the pressing acquisition unit 30 is seated and the outer peripheral surface of the housing may be greater than a distance between the one surface of the first support plate 221 on which the elastic unit 40 is seated and the outer peripheral surface of the housing.

The second support plate 222 and the first support plate 221 may be formed integrally, or may be provided as separate components and mechanically coupled to each other.

As the pressing body 21 moves toward a pressing direction toward the center of the accommodation space 11 of the housing 10, or toward a releasing direction opposite to the pressing direction, the support plate 22 coupled to the pressing body 21 may also move toward the pressing direction or the releasing direction. When the pressing body 21 moves in the pressing direction, the support plate 22 may move toward and approach the outer peripheral surface of the housing. When the pressing body 21 moves in the releasing direction, the support plate 22 may move away from the outer peripheral surface of the housing. As the pressing body 21 moves, distances between the first to second support plates 221 and 222 and the outer peripheral surface of the housing 10 may vary, and horizontal lengths of the elastic unit 40 and the pressure acquisition unit 30, which are disposed between the first support plate 221 and the outer peripheral surface of the housing 10, and between the second support plate 222 and the outer peripheral surface of the housing 10, respectively, may vary.

The pressure acquisition unit 30 may be configured to detect pressure applied to the outer peripheral surface of the secondary battery by the clamping jig 20. The pressure acquisition unit 30 may extend between the clamping jig 20 and the outer peripheral surface of the housing 10. More specifically, the pressure acquisition unit 30 may horizontally extend between the second support plate 222 and the outer peripheral surface of the housing 10. One end portion of the pressure acquisition unit 30 may be in contact with the second support plate 222, and an opposite end portion of the pressure acquisition unit 3 may be in contact with the outer peripheral surface of the housing 10 for support. A coupling structure (e.g., a groove structure) for seating the pressure acquisition unit 30 may be formed on the one surface of the second support plate 222 on which the one end portion of the pressure acquisition unit 30 is seated, and the outer peripheral surface of the housing 10 on which the opposite end portion of the pressure acquisition unit 40 is seated.

The pressure acquisition unit 30 may be configured to acquire pressure applied to the outer peripheral surface of the secondary battery by the clamping jig 20. The pressure acquisition unit 30 may acquire load applied between the second support plate 222 and the outer peripheral surface of the housing 10, and based on this, a pressure applied to the secondary battery by the clamping jig 20 may be obtained.

By acquiring pressure applied to the outer peripheral surface of the secondary battery by the clamping jig 20 through the configuration of the pressure acquisition unit 30, excessive pressing of the clamping jig 20 may be prevented, and may avoid physical damage to the secondary battery and the clamping jig 20.

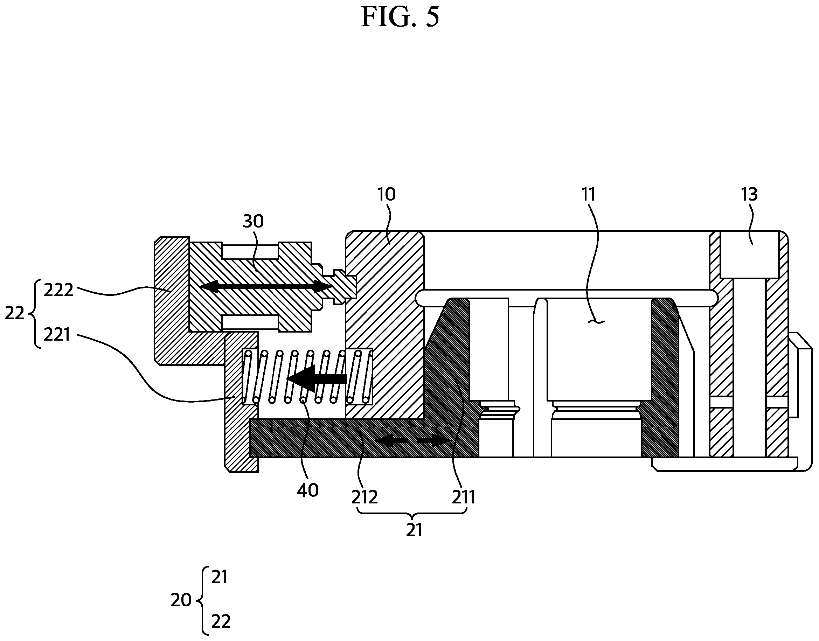

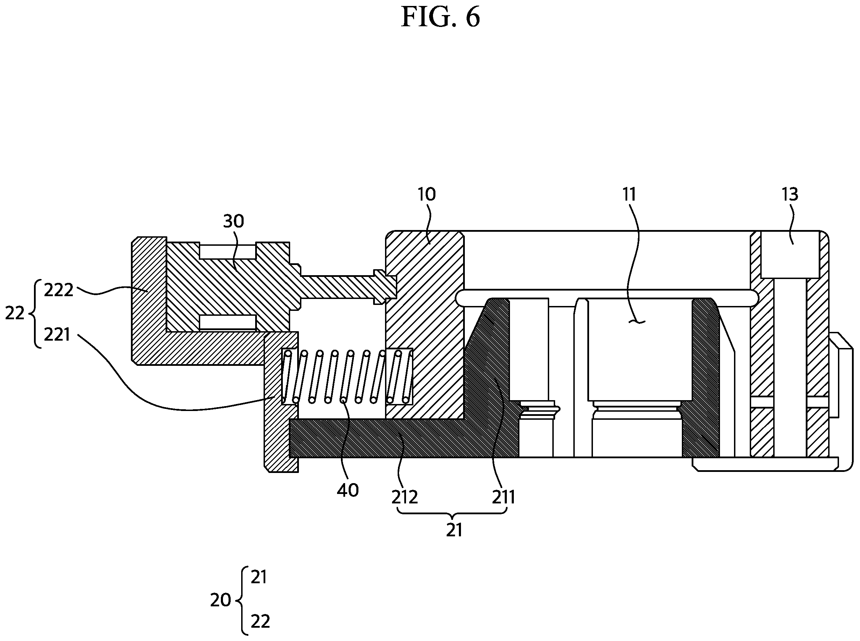

Additionally, the pressure acquisition unit 30 may be configured to provide a preset load value to the clamping jig 20. In this case the pressure acquisition unit 30 may provide a pressing force corresponding to the preset load value between the second support plate 222 and the outer peripheral surface of the housing 10, and if a detected load exceeds the preset load value, the operation of the pressure acquisition unit 30 may be halted, or a signal may be transmitted to verify the same. The pressure acquisition unit 30, for example, may be a Cellex cylinder configured to simultaneously measure and apply pressure. Descriptions of the shape and function of the pressure acquisition unit 30 will be provided in detail with reference to FIGS. 5 and 6.

The clamping apparatus according to an example embodiment of the present disclosure may also include the elastic unit 40. The elastic unit 40 may be configured to press the clamping jig 20 in the releasing direction, such that the clamping jig 20 releases the clamped state of the secondary battery.

The elastic unit 40 may extend between the support plate 22 and the outer peripheral surface of the housing 10. The elastic unit 40 may extend between the first support plate 221 and the outer peripheral surface of the housing 10, and may be disposed to be spaced apart from the pressure acquisition unit 30 in the vertical direction. The elastic unit 40 may be disposed to be downwardly spaced apart from the pressure acquisition unit 30.

The elastic unit 40 may extend in the horizontal direction, and, for example, the elastic unit 40 may be a spring having a predetermined elastic modulus. The elastic unit 40 and the pressure acquisition unit 30 may be placed parallel to each other in the horizontal direction. The elastic unit 40 may move the pressing body 21 connected to the first support plate 221 in the releasing direction by elastically pressing the first support plate 221 from the outer peripheral surface of the housing 10 in the releasing direction, that is, in a direction moving away from the housing 10.

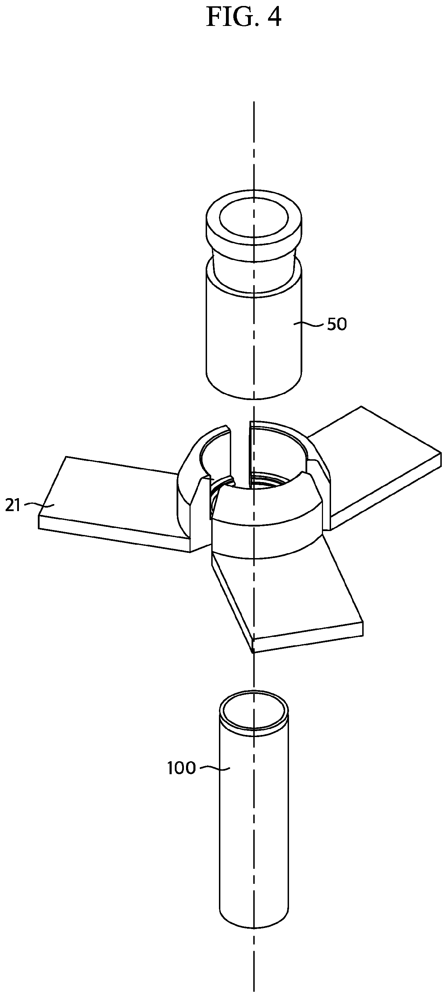

FIG. 4 is an exploded perspective view illustrating a state in which a cylindrical secondary battery 100 is secured within the clamping apparatus according to an example embodiment of the present disclosure.

Referring to FIG. 4, the pressing body 21 of the clamping jig may surround and press an outer peripheral surface of the cylindrical secondary battery 100. A punch unit 50 may move downward toward an upper end of the secondary battery 100 secured by the pressing body 21 to crimp the secondary battery 100 by folding a can of the secondary battery 100 inwardly.

FIG. 5 is a cross-sectional view of the clamping apparatus taken along line A-A of FIG. 1 according to an example embodiment of the present disclosure, and FIG. 6 is a cross-sectional view of the clamping apparatus of FIG. 5 illustrating a state in which a length of the pressure acquisition unit 30 is adjusted, according to an example embodiment of the present disclosure.

Referring to FIGS. 5 and 6, the pressure acquisition unit 30 of the clamping apparatus according to an example embodiment of the present disclosure may be configured to have an adjustable length. The pressure acquisition unit 30 may be a Cellex cylinder configured to have an adjustable length. The pressure acquisition unit 30 may be disposed and extend between the second support plate 222 and the housing 10 to detect pressure applied to the secondary battery by the pressing body 21 and to control the pressure applied to the secondary battery by the pressing body 21 simultaneously. That is, the pressure acquisition unit 30 may adjust a pressing force applied to the secondary battery by the clamping jig 20.

The pressure acquisition unit 30 may be configured to provide a preset load value to the clamping jig 20, and the load value set in the pressure acquisition unit 30 may be selectively adjusted as needed. For example, when the pressure acquisition unit 30 is provided as a Cellex cylinder, a range over which the cylinder applies pressure may vary according to a stroke length of the cylinder. If the stroke length of the pressure acquisition unit 30 is short, the pressure applied by the pressure acquisition unit 30 between the second support plate 222 and the housing 10 may decrease, in which case the pressing force applied to the secondary battery by the clamping jig 20 may increase. Alternatively, if the stroke length of the pressure acquisition unit 30 increases, the pressure applied by the pressure acquisition unit 30 between the second support plate 222 and the outer peripheral surface of the housing 10 may increase, in which case the pressing force applied to the secondary battery by the clamping jig 20 may decrease. This may be because the direction of the load applied to the clamping jig 20 by the pressure acquisition unit 30 is the releasing direction that is opposite to the pressing direction in which the clamping jig 20 presses the secondary battery.

In other words, when the stroke length of the pressure acquisition unit 30 increases, the pressing force applied to the secondary battery by the clamping jig 20 may decrease, and when the stroke length of the pressure acquisition unit 30 decreases, the pressing force applied to the secondary battery by the clamping jig 20 may increase.

By employing such a configuration, the pressure applied to the secondary battery by the clamping jig 20 may be efficiently controlled simply by adjusting the mechanical configuration of the pressure acquisition unit 30, and furthermore, physical damage to the secondary battery may be significantly reduced by controlling the operation of the clamping apparatus based on whether the pressure detected by the pressure acquisition unit 30 exceeds a preset load value.

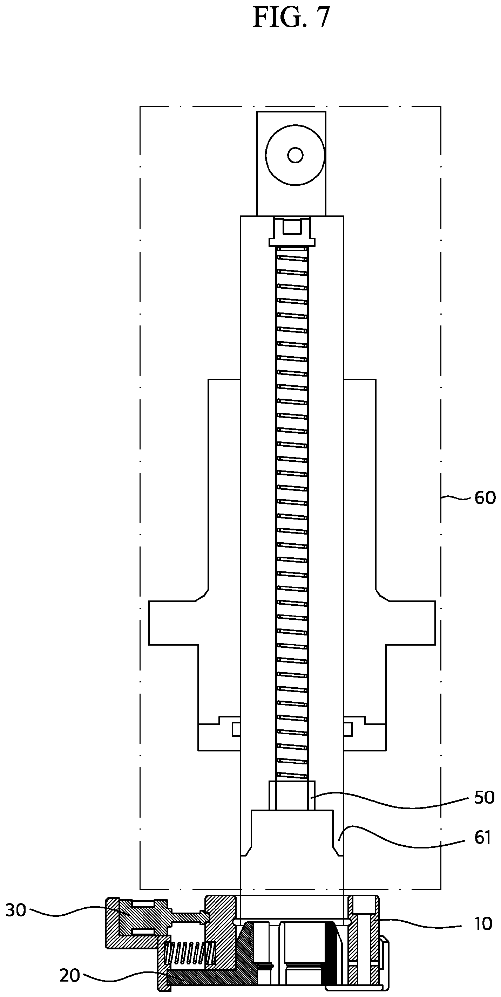

FIG. 7 is a schematic view of a forming apparatus according to an example embodiment of the present disclosure.

Referring to FIG. 7, the forming apparatus according an example embodiment of the present disclosure may include the housing 10, the clamping jig 20, the pressure acquisition unit 30, the punch unit 50, and a driving unit 60. It should be noted that the descriptions of the components of the clamping apparatus according to an embodiment of the present disclosure described above may also be applied to the forming apparatus according to an embodiment of the present disclosure.

The housing 10 may be provided with the accommodation space in which the cylindrical secondary battery is accommodated. The clamping jig 20 may be configured to secure the secondary battery by pressing the outer peripheral surface of the secondary battery, and at least a portion thereof may be disposed within the accommodation space of the housing. The pressure acquisition unit 30 may extend between the clamping jig 20 and the housing 10 to detect pressure applied to the outer peripheral surface of the secondary battery by the clamping jig 20.

The punch unit 50 may be configured to form the secondary battery, which is secured by the clamping jig 20, by pressing an upper end portion of the secondary battery. The punch unit 50 may move downward toward the upper end of the secured secondary battery, and may apply uniform pressure to an opening of the can of the cylindrical secondary battery to seal the top cap assembly. The punch unit 50 may be coupled to the driving unit 60. The punch unit 50 may be positioned within the driving unit 60.

The driving unit 60 may be configured to drive the clamping jig 20 toward the outer peripheral surface of the secondary battery. The driving unit 60 may include a spindle configured to secure and move the punch unit 50 in the vertical direction, and a pressing slider 61 configured to engage with the clamping jig 20 may be formed below the driving unit 60. The pressing slider 61 may move downward together with the punch unit 50 via the spindle, and may engage with an inclined surface formed at an upper end portion of the clamping jig 20 to drive the clamping jig 20 horizontally in the pressing direction. The driving unit 60 may drive the punch unit 50 and the clamping jig 20 simultaneously through the downward movement of the spindle.

While the example embodiments have been described with reference to specific details such as particular components and limited example embodiments as well as the drawings, these are provided merely to facilitate a general understanding of the present disclosure. Furthermore, the present disclosure is not limited to the above-described example embodiments, and various modifications and variations may be made from these descriptions by those skilled in the art to which the present disclosure pertains. Therefore, the spirit of the present disclosure shall not be limited to the described example embodiments, and it should be understood that not only the claims described below, but also all technical ideas equivalent to or within the scope of the variations of the claims, fall within the scope and spirit of the present disclosure.

### [Description of Symbols]

10: Housing
11: Accommodation space
13: Coupling member
20: Clamping jig
21: Pressing body
211: Pressing head
212: Base plate
22: Support plate
221: First support plate
222: Second support plate
30: Pressure acquisition unit
40: Elastic unit
50: Punch unit
60: Driving unit
61: Pressing slider

## Claims

1. A clamping apparatus comprising:
a housing formed with an accommodation space in which a cylindrical secondary battery is accommodated;
a clamping jig configured to secure the secondary battery by pressing an outer peripheral surface of the secondary battery and of which at least a portion is positioned within the accommodation space; and
a pressure acquisition unit extending between the clamping jig and the housing to detect a pressure applied to the outer peripheral surface of the secondary battery by the clamping jig.

2. The clamping apparatus of claim 1, wherein the pressure acquisition unit
extends in a pressing direction in which the clamping jig presses the secondary battery.

3. The clamping apparatus of claim 1, wherein the clamping jig comprises:
a pressing body configured to press the outer peripheral surface of the secondary battery; and
a support plate coupled to the pressing body to support the pressure acquisition unit.

4. The clamping apparatus of claim 3, wherein one end portion of the
pressure acquisition unit is configured to be in contact with the support plate and an opposite end portion of the pressure acquisition unit is configured to be in contact with an outer peripheral surface of the housing.

5. The clamping apparatus of claim 3, wherein the pressing body comprises:
a pressing head positioned within the accommodation space of the housing and configured to be in contact with the outer peripheral surface of the secondary battery; and
a base plate extending outwardly from the pressing head toward an exterior of the housing, and
the support plate is provided at an end portion of the base plate in an extension direction of the base plate.

6. The clamping apparatus of claim 5, further comprising an elastic unit configured to press the clamping jig in a releasing direction in which the clamping jig moves away from the secondary battery, such that the clamping jig releases a clamped state of the secondary battery.

7. The clamping apparatus of claim 6, wherein the elastic unit extends
between the support plate and an outer peripheral surface of the housing, and
the pressure acquisition unit is disposed to be spaced apart from the elastic unit in a vertical direction and parallel to the elastic unit.

8. The clamping apparatus of claim 6, wherein the support plate includes:
a first support plate coupled to the base plate to support the elastic unit; and
a second support plate coupled to an upper portion of the first support plate to support the pressure acquisition unit.

9. The clamping apparatus of claim 1, wherein the pressure acquisition unit is configured to change in length in a pressing direction in which the clamping jig presses the secondary battery.

10. The clamping apparatus of claim 9, wherein a pressing force with which the clamping jig presses the secondary battery varies according to the length of the pressure acquisition unit.

11. The clamping apparatus of claim 10, wherein the pressing force decreases when the length of the pressure acquisition unit increases, and the pressing force increases when the length of the pressure acquisition unit decreases.

12. The clamping apparatus of claim 1, wherein the clamping jig is provided in a plurality and is disposed to surround the secondary battery in a circumferential direction.

13. The clamping apparatus of claim 1, wherein the pressure acquisition unit is a Cellex cylinder.

14. A forming apparatus comprising:
a housing formed with an accommodation space in which a cylindrical secondary battery is accommodated;
a clamping jig configured to secure the secondary battery by pressing an outer peripheral surface of the secondary battery and of which at least a portion is positioned within the accommodation space;
a pressure acquisition unit extending between the clamping jig and the housing to detect a pressure applied to the outer peripheral surface of the secondary battery by the clamping jig;
a driving unit configured to operate the clamping jig in a direction toward the outer peripheral surface of the secondary battery; and
a punch unit configured to form an upper end portion of the secondary battery, secured by the clamping jig, by pressing, the punch unit being coupled to the driving unit.
